# EUROPÄISCHE PATENTSCHRIFT

(11) **EP 3 559 100 B1**
(45) Veröffentlichungstag und Bekanntmachung des Hinweises auf die Patenterteilung: **28.01.2026**
(21) Anmeldenummer: 17838175.2
(22) Anmeldetag: 21.12.2017
(51) Int. Cl.: C08J 11/08, B29B 17/02, C08L 23/02

(54) **LÖSUNGSMITTEL SOWIE VERFAHREN ZUM LÖSEN EINES KUNSTSTOFFS VON EINEM FESTSTOFF INNERHALB EINER SUSPENSION**
SOLVENT AND METHOD OF SEPARATING A PLASTIC FROM A SOLID WITHIN A SUSPENSION
SOLVANT ET PROCÉDÉ DESTINÉ À SÉPARER PAR DISSOLUTION UN PLASTIQUE D'UN SOLIDE À L'INTÉRIEUR D'UNE SUSPENSION

(30) Priorität: 21.12.2016 DE 102016015198
(43) Veröffentlichungstag der Anmeldung: 30.10.2019
(73) Patentinhaber: LYB Solvent Recycling GmbH, 06217 Merseburg (DE)
(72) Erfinder: WOHNIG, Klaus, 14052 Berlin (DE); KAINA, Mike, 14532 Kleinmachnow (DE); FLEIG, Michael, 39307 Genthin (DE); HAGEN, Hanel, 04103 Leipzig (DE)
(74) Vertreter: LyondellBasell
(86) Internationale Anmeldenummer: PCT/EP2017/001440
(87) Internationale Veröffentlichungsnummer: WO 2018/114047

(56) Entgegenhaltungen:
- EP-A1- 0 849 312
- DE-A1- 102013 212 813
- DE-A1- 19 751 441
- DE-A1- 19 829 898
- DATABASE WPI Week 200959, Derwent World Patents Index; AN 2009-M63378, XP002780047

## Beschreibung

### Gebiet der Erfindung

Die Erfindung betrifft ein Verfahren zum Lösen eines in und/oder an einem Feststoff befindlichen Kunststoffs innerhalb einer Suspension, wie etwa Abfallsuspension, mit einem Lösungsmittel wie in die Ansprüche definiert.

### Technologischer Hintergrund

Insbesondere in den Industrienationen fordert der nationale wie auch grenzüberschreitende Warenverkehr eine in zunehmendem Maße nachhaltige Rohstoffwirtschaft. Um die Menge an letztlich zu deponierenden Abfällen möglichst gering zu halten, sollen dem Warenkreislauf zugeführte Güter und Waren am Ende ihres Lebenszyklus daher zunehmend recycelt werden. Dies verlangt eine zumindest grobe Vorsortierung, um die tatsächlich wiederverwertbaren Anteile einem geeigneten Recyclingprozess zuführen zu können.

Bereits etablierte Möglichkeiten wie etwa die direkte Abgabe von Wertstoffen an eingerichteten Sammelstellen (Wertstoffhöfe) werden beispielsweise in Deutschland durch eine haushaltsnahe Sammlung und Entsorgung des häuslich vorsortierten Abfalls ergänzt (Mülltrennung). Grundlage hierfür bildet das sogenannte "Duale-System", bei dem spezielle Bestandteile - wie etwa solche aus Papier und/oder Kunststoff - durch den Verbraucher selbst getrennt erfasst und vom übrigen Restmüll separiert dem kommunalen Abfallunternehmen zur Abholung bereitgestellt werden. Dies kann beispielsweise über eigens hierfür im Außenbereich aufgestellte Behälter oder durch dem einzelnen Haushalt bereitgestellte Säcke erfolgen.

Dem zumindest grob vorsortierten Abfall einerseits steht andererseits die gezielte Abtrennung und Verarbeitung der darin enthaltenen Wertstoffe gegenüber. Hierbei stellen insbesondere solche Teile besondere Herausforderungen dar, welche eine oder gar mehrere Verbindungen unterschiedlicher Materialien aufweisen. Üblicherweise werden die zu recycelnden Abfälle einer zunächst groben Zerstückelung zugeführt, um eine möglichst einfache Handhabung und insbesondere effektive Verarbeitung in Abfall-Trennanlagen zu ermöglichen. Basierend auf der Art des Abfalls weist das dann vorliegende Schredder-Granulat flächige und/oder demgegenüber räumliche Strukturen auf, so dass zwischen sogenannten 2D- (flächig) und entsprechenden 3D-Materialien (räumlich) unterschieden wird.

Am Beispiel von Verkaufsverpackungen erläutert kann es sich bei dem zu verarbeitenden Abfall beispielsweise um Folienbeutel oder Getränkekartons handeln, von denen letztere allgemein auch unter dem Gattungsnamen "Tetra Pak^{®}" bekannt sind. Derartige Verpackungen weisen eine mehrschichtige Verbundkonstruktion auf, welche beispielsweise einzelne Lagen aus Papier und/oder Aluminium und Kunststoff umfassen. Aufgrund ihrer als Schredder-Granulat im Wesentlichen flächigen Form gelten derartige Verpackungen als 2D-Materialien. Demgegenüber sind beispielsweise recycelbare Geräte wie etwa Computertastaturen und Bildschirme oder auch Kraftfahrzeugteile wie Verkleidungen und Armaturenbretter bereits aufgrund ihres auch nach dem mechanischen Zerkleinern noch vorliegenden Volumens den 3D-Materialien zugehörig.

Unabhängig von der Form der zu verarbeitenden Abfälle bedarf es am Prozessende einer möglichst verunreinigungsarmen oder gar sortenreinen Abtrennung und Rückgewinnung der wiederverwertbaren Bestandteile aus Materialverbindungen, um im Sinne eines stofflichen Recyclings erneut Verwendung zu finden. Im Stand der Technik sind hierzu Verfahren bekannt, welche auf der Erwärmung von Verbundwerkstoffe aufweisendem Abfall basieren. Hierdurch sind insbesondere die darin enthaltenen thermoplastischen Kunststoffe von den übrigen Bestandteilen abtrennbar, indem diese aufgeschmolzen und die in der Kunststoffschmelze enthaltenen übrigen Beimengungen durch geeignete Filtereinrichtungen ausgesiebt werden. Bei den Kunststoffen handelt es sich häufig um ein- oder mehrschichtige Folien aus Polyamid (PA) und/oder Polyethylen (PE) und/oder Polypropylen (PP).

Rein thermisch arbeitende Recyclingverfahren stoßen hinsichtlich einer bevorzugt selektiven Abtrennung beispielsweise mehrschichtiger Verbundkonstruktion aus unterschiedlichen Kunststoffen bisweilen an ihre Grenzen. Dies liegt im Wesentlichen an den mitunter nah beieinander liegenden Schmelzpunkten einzelner Kunststoffe. Da die vorliegenden lokalen Temperaturen während der Behandlung insbesondere in Großanlagen nur schwer zu kontrollieren sind, kann nicht ausgeschlossen werden, dass sich der abgetrennte Kunststoff aus zwei oder mehr unterschiedlichen Kunststoffarten zusammensetzt.

Alternative Verfahren zum Abtrennen und Lösen von Kunststoffen setzen daher auf die Verwendung von Lösungsmitteln:
Aus der DE 43 43 784 A1 ist hierzu eine Vorrichtung sowie ein Verfahren bekannt, welches den Einsatz eines Lösungsmittels in Form von Ameisensäure vorschlägt. Das Lösungsmittel ist dazu vorgesehen, in Abfällen enthaltenes Polyamid (PA) selektiv aus diesem herauszulösen. Hierzu werden die Abfälle in eine bewegliche Siebtrommel überführt, welche in einem mit dem Lösungsmittel befüllten Behälter rotierbar angeordnet ist. Innerhalb der Siebtrommel angeordnete Leisten wirken dabei mechanisch auf die Abfälle ein, um eine verbesserte Trennung einzelner Bestandteile zu erreichen. Der Behälter ist an ein Leitungssystem angeschlossen, so dass das Lösungsmittel mittels einer Pumpe im Kreislauf geführt werden kann. Die Abtrennung der übrigen Bestandteile erfolgt durch Filter, Dekanter oder Zentrifugen, wobei das gelöste Polyamid (PA) durch ein geeignetes Fällmittel wie etwa Wasser ausgefällt wird. Die anschließende Trennung des aus der Ameisensäure und dem Fällmittel bestehenden Filtrats erfolgt letztlich destillativ, adsorptiv oder durch Kristallation. Das so gewonnene Polyamid-Pulver kann anschließend getrocknet und beispielsweise zu technischen Fasern oder Regenerat wiederaufgearbeitet werden.

Das Verfahren der DE 43 43 784 A1 zeichnet sich insbesondere durch gemäßigte Temperaturen von 0° bis 60° C aus, woraus eine Verarbeitung unter normalen atmosphärischen Druckverhältnissen (drucklos) resultiert. Dabei ist es gezielt auf die Abtrennung von Polyamid (PA) ausgerichtet.

Die DE 10 2005 026 451 A1 beschreibt ein Verfahren zum Recycling von Kunststoffen, bei dem ebenfalls ein Lösungsmittel eingesetzt wird. Das Verfahren findet zum Recycling beliebiger Kunststoffe Verwendung, insbesondere von Kunststoffen aus der Elektronikschrottverarbeitung und aus Schredder-Leichtfraktionen. Die zu recycelnden Kunststoffe enthalten dabei mindestens zwei auf Polystyrol (PS) basierende Polymere, Copolymere oder Blends hiervon, welche hierfür mit dem Lösungsmittel versetzt werden. Die Menge an Lösungsmittel wird dabei möglichst gering gehalten, um große Lösemittelvolumina zu vermeiden. Nachdem die Kunststoffe in Lösung gegangen sind, werden diese anschließend durch Zugabe eines entsprechenden Fällmittels ausgefällt, so dass dann das - aufgrund der geringen Lösemittelmenge - gelartige Fällungsprodukt von den weiteren Bestandteilen des Kunststoffs abgetrennt werden kann.

EP 0849312 A1 offenbart ein Verfahren zur Gewinnung von Polyolefinen aus polyolefinhaltigen Kunststoffgemischen oder Abfällen, wobei Kohlenwasserstofffraktion des Benzin- oder Dieselkraftstoffbereiches als Lösungsmittel eingesetzt wird.

Das offenbarte Verfahren sieht ein Lösen der Kunststoffe unter milden Temperaturen vor, welche vorzugsweise unterhalb von 100° C liegen. Erst die anschließende Ausfällung der im Lösungsmittel gelösten Polymere wird bei Temperaturen bis 170° C, bevorzugt bei Temperaturen bis 100° C und besonders bevorzugt im Temperaturbereich von Raumtemperatur (20° C) bis 50° C durchgeführt. Durch die Wahl des jeweiligen Fällmittels können so die zuvor gelösten Kunststoffe selektiv ausgefällt werden.

Mit den bisher bekannten Verfahren und Vorrichtungen ist eine Durchführung des insbesondere im Zeichen des Umweltschutzes stehenden Recyclings von Wertstoffen durchführbar. Dabei verwendete Lösungsmittel weisen gegenüber einer reinen Erhitzung den Vorteil auf, dass die jeweiligen Kunststoffanteile möglichst vollständig aus dem zu behandelnden Abfall herausgelöst werden können. Allerdings sind rein mit Wärme arbeitende Trennaggregate mit Zentrifugen mitunter nicht immer dazu geeignet, um sämtliche Feststoffe aus den dann vorliegenden viskosen Schmelzen herauszutrennen. Dies gilt insbesondere für solche Feststoffe mit einer gegenüber der jeweiligen Emulsion bzw. Lösung geringeren Dichte, wie beispielsweise Kork. Zudem verlangen derartige Systeme eine mitunter lange Zeitdauer, um den abzutrennenden Kunststoff bis auf seine Erweichungstemperatur zu erwärmen. Auch ist nicht auszuschließen, dass der Abfall weitere Bestandteile mit einer unterhalb oder gleichen Erweichungstemperatur wie der herauszulösende Kunststoff enthält, so dass eine gezielte Abtrennung von quasi reinem Kunststoff oder beispielsweise reinem Polyethylen (PE) oder Polyamid (PA) erschwert oder gar unmöglich ist. Aufgrund der dann enthaltenen Verunreinigungen und/oder Kunststoffmischungen sind insofern weitergehende Maßnahmen notwendig, um eine ausreichende Trennung der zu recycelnden Stoffe zu gewährleisten.

Demgegenüber geht der Einsatz von zumeist leicht- oder gar hochentzündlichen Lösungsmitteln insbesondere im großtechnischen Einsatz mit einer entsprechend erhöhten Gefährdung einher. Um eine möglichst geringe Ausgasung der Lösungsmittel aus dem Filtrat zu gewährleisten, ist - trotz der mitunter bei zunehmender Temperatur steigerbaren Reaktionsfreudigkeit des Lösungsmittels - dessen Höchsttemperatur nach oben hin zu begrenzen. Hierfür vorliegende Sicherheitsbestimmungen können eine Betriebszulassung für derartige Anlagen durchaus verhindern. Insbesondere der Einsatz rotierender Vorrichtungen wie etwa einer Zentrifuge begünstigt zudem den Übergang des Lösungsmittels in einen freien gasförmigen Zustand.

Vor diesem Hintergrund bieten insbesondere die derzeit bekannten Lösungsmittel sowie Vorrichtungen und Verfahren zur Durchführung des großtechnischen Recyclings von Kunststoff enthaltenden Abfällen daher auch weiterhin noch Raum für Verbesserungen.

### Zusammenfassung der Erfindung

Davon ausgehend liegt der Erfindung die Aufgabe zugrunde, ein wie zuvor aufgezeigtes Verfahren zum Lösen eines in und/oder an einem Feststoff befindlichen Kunststoffs innerhalb einer Suspension, wie etwa Abfallsuspension, insbesondere für einen großtechnischen Einsatz in einer Abfall-Trennanlage dahingehend weiterzuentwickeln, dass die Rückgewinnung von Kunststoff mit hoher Ausbeute innerhalb kürzerer Zeit ermöglicht wird.

Die Lösung dieser Aufgabe besteht nach der Erfindung in einem Verfahren zum Lösen eines in und/oder an einem Feststoff befindlichen Kunststoffs innerhalb einer Suspension, wie etwa Abfallsuspension, mit einem Lösungsmittel nach den Merkmalen von Anspruch 1. Weitere Einzelheiten, Merkmale und Vorteile der Gegenstände der Erfindung ergeben sich aus den jeweils abhängigen Unteransprüchen.

Basis hierfür ist das vorherige Ansetzen einer Suspension, indem zunächst Kunststoff aufweisender Feststoff, beispielsweise Abfall, wenigstens einem Lösungsmittel zugeführt wird. Dies kann beispielsweise in geeigneten Becken oder Behältern erfolgen. Das wenigstens eine Lösungsmittel ist dabei so eingestellt, dass mindestens ein Kunststoff von dem Feststoff abgetrennt wird, indem der Kunststoff zumindest teilweise innerhalb des Lösungsmittels in Lösung geht, wobei der zu lösende Kunststoff Polyethylen (PE) ist, und wobei das Lösungsmittel Cycloalkane aufweist.

Die Erfindung geht dabei von einer Formulierung für das Lösungsmittel aus, bei der dessen lösende Wirkung vom Erreichen einer Löse-Temperatur abhängig ist. Mit anderen Worten ist das Lösungsmittel dabei so eingestellt, dass dessen angedachten Eigenschaften erst bei erreichen und/oder im Bereich einer Löse-Temperatur des Lösungsmittels ihre lösende Wirkung auf den Kunststoff erzielen. Dies meint, dass erst dann dessen lösende Wirkung aktiviert oder am höchsten ist. Erfindungsgemäß ist das Lösungsmittel dabei so eingestellt, dass dessen Löse-Temperatur in einem Bereich um seine Siede-Temperatur herum liegt. Hiernach tritt die, insbesondere maximale, lösende Wirkung des Lösungsmittels auf den Kunststoff erst in einem Temperaturbereich um die Siede-Temperatur des Lösungsmittels ein.

Das erfindungsgemäße Lösungsmittel eignet sich insofern in überaus vorteilhafter Weise für eine Verwendung innerhalb eines geschlossenen, gasdichten Systems, worin es quasi bis in einen Temperaturbereich nahe an oder über seine Siede-Temperatur hinaus bis zu seiner Löse-Temperatur erhitzbar oder gar überhitzbar ist. Die sich hieraus ergebenden Vorteile liegen beispielsweise in einer dann hohen Reaktionsfreudigkeit des Lösungsmittels, welche zu einem überaus schnellen in Lösung gehen des Kunststoffs führt. Gleichzeitig ist so ein vollständigeres Lösen des Kunststoffs aus dem jeweiligen Gut heraus realisierbar, wodurch die Ausbeute an zu recycelndem Kunststoff entsprechend erhöht ist. Die erfindungsgemäßen Vorteile basieren insbesondere auf der aus der hohen Er- oder gar Überhitzbarkeit des Lösungsmittels resultierenden Druckerhöhung innerhalb eines geschlossenen, gasdichten Systems.

Bisher bekannte Lösungsmittel wurden hingegen bisher grundsätzlich so eingestellt und verwendet, dass der Kunststoff entweder bei milden oder in jedem Fall unterhalb des - in Bezug auf ein offenes System vorliegenden - Siedepunkts des jeweiligen Lösungsmittels gelegenen Temperaturen in Lösung geht. Hingegen erfolgte das anschließende Ablösen des Kunststoffs von dem Lösungsmittel durch dessen Ausfällen aus der das Lösungsmittel und den darin gelösten Kunststoff enthaltenden Polymerlösung heraus bei höheren Temperaturen. Hier geht die vorliegende Erfindung genau den entgegengesetzten Weg, indem das Lösen des Kunststoffs bei nahe der Siede-Temperatur des Lösungsmittels oder gar über diesen liegenden Temperaturen erfolgt und das Ablösen demgegenüber dann bei niedrigeren Temperaturen erfolgen kann. Hierfür ist beispielsweise ein sogenanntes Flashen der Polymerlösung möglich, wobei diese zusammen mit dem Feststoff als Suspension zunachst erhitzt oder gar überhitzt und anschließend entspannt wird. Aufgrund der erst im er- oder gar überhitzten Zustand vorliegenden lösenden Wirkung des Lösungsmittels kann dieses insgesamt kostengünstiger hergestellt werden. Zudem ist es hierdurch möglich, dass Lösungsmittel möglichst frei von etwaigen sonst verbleibenden, mitunter toxischen Inhaltsstoffen quasi rückzugewinnen, um dieses erneut zu verwenden.

Eine mögliches erfindungsgemäßes Lösungsmittel kann beispielsweise ein Gemisch aus Cycloalkanen aufweisen, wie etwa Methylcyclohexan. Die jeweilige Auswahl der Inhaltsstoffe ist durch den Fachmann zu bestimmen, der in Abhängigkeit des oder der zu lösenden Kunststoffe ein geeignetes Lösungsmittel oder eine geeignete Zusammensetzung von Lösungsmitteln wählen wird. So eignen sich Cycloalkane beispielsweise in besonders vorteilhafter Weise zum Lösen von Polyethylen (PE).

Ziel hierbei ist das Einstellen einer möglichst geringen Siede-Temperatur für das Lösungsmittel, wodurch sich ein wirtschaftlicher Betrieb und eine einfache Ablösung des gelösten Kunststoffs von dem Lösungsmittel ergeben. Die Siede-Temperatur liegt in einem Bereich von 100° C bis 140° C, welche durch die Wahl eines geeigneten Lösungsmittels oder in Form eines Verschnitts von zwei oder mehr Lösungsmitteln entsprechend einstellbar ist. Grundsatzlich wird es als besonders vorteilhaft angesehen, wenn aus einer Reihe an geeigneten Lösungsmitteln jenes ausgewählt wird, welches die geringste Siede-Temperatur besitzt.

Selbstverständlich ist die Löse-Temperatur des Lösungsmittels so gewählt, dass diese unterhalb eines Wertes für die Schmelze des jeweiligen Kunststoffs liegt, um einer etwaigen Zerstörung der Polymere sicher vorzubeugen. Gleichzeitig kann die Siede-Temperatur des Lösungsmittels möglichst niedrig eingestellt sein, wobei sie beispielsweise von 80° C bis unter 120° C betragen kann.

Das Lösungsmittel kann so eingestellt sein, dass - bei Vorhandensein von zwei oder gar mehr Kunststoffen - dessen lösende Wirkung nur selektiv für einen der Zielkunststoffe gilt. Alternativ hierzu kann das Lösungsmittel auch für das Lösen wenigstens zweier oder aller vorhandenen Kunststoffe eingestellt sein, wobei die getrennte Gewinnung des jeweiligen Zielkunststoffs dann durch selektives Ablösen dieses aus der Lösung heraus erfolgen kann.

Gemäß der Erfindung liegt die Löse-Temperatur des Lösungsmittels in einem Temperaturbereich, welcher um +/- 5° K um den Siede-Punkt des Lösungsmittels liegt. Hierdurch erhöht sich die Prozesssicherheit insgesamt, da die aktive Bandbreite des Lösungsmittels so einen beherrschbaren Temperaturbereich insbesondere im großtechnischen Einsatz zulässt.

Weiterhin ist die Erfindung auf ein Verfahren gerichtet, welches dem Lösen eines in und/oder an einem Feststoff befindlichen Kunststoffs innerhalb einer Suspension, insbesondere Abfallsuspension, mit einem Lösungsmittel dient. Das erfindungsgemäße Verfahren geht vorliegend davon aus, dass zuvor eine den Feststoff nebst Kunststoff in Kombination mit dem Lösungsmittel enthaltende Suspension angelegt wird, indem der Kunststoff enthaltende Feststoff in das Lösungsmittel überführt wird. Hierin geht der Kunststoff innerhalb des Lösungsmittels in Lösung, wobei das Lösungsmittel und der darin gelösten Kunststoff gemeinsam eine Polymerlösung bilden.

Gemäß der Erfindung wird die zuvor angelegte Suspension innerhalb eines gasdichten Systems erhitzt. Das Erhitzen erfolgt dabei dergestalt, dass eine Er-oder gar Überhitzung des Lösungsmittels auf eine Löse-Temperatur erfolgt, welche in einem Temperaturbereich um die Siede-Temperatur des Lösungsmittels liegt. Die sich dabei insbesondere aus der Er- oder Überhitzung des Lösungsmittels auf eine im Bereich seiner Siede-Temperatur liegende Löse-Temperatur ergebenden Vorteile wurden bereits zuvor im Zusammenhang mit der Vorstellung des erfindungsgemäßen Lösungsmittels näher erläutert, so dass zur Vermeidung von Wiederholungen an dieser Stelle auf die entsprechenden Ausführungen hierzu verwiesen wird.

Gemäß der Erfindung werden die Suspension und insbesondere das Lösungsmittel dabei auf einen Temperaturbereich von +/- 5° K um seine Siede-Temperatur herum erhitzt.

In bevorzugter Weise kann ein innerhalb des geschlossenen, gasdichten Systems vorliegender Innendruck dabei manipuliert werden. Eine solche Manipulation kann sich dabei insbesondere in einer Erhöhung des Innendrucks äußern. Neben der möglichen Verwendung einer mit dem System auf geeignete Weise verbundenen Vorrichtung kann eine solche Erhöhung des Innendrucks bereits allein aus der ohnehin durchzuführenden Überhitzung des Lösungsmittels heraus erfolgen. Demgegenüber kann eine Herabsetzung des Innendrucks allein auf einer entsprechenden Abkühlung des Lösungsmittels und/oder dem Entspannen des Systems basieren. Als geeignete Vorrichtungen können beispielsweise ein Verdichter und/oder in bevorzugter Weise eine Inertisierungs-Einrichtung verwendet werden. Insbesondere die Erhöhung des Innendrucks verbessert die Eigenschaften des Lösungsmittels derart, dass ein schnelleres Lösen des Kunststoffs und eine Erhöhung der Ausbeute an gelöstem Kunststoff durchführbar sind.

Das erfindungsgemäße Verfahren sieht vor, dass eine Trocknung des oder der Feststoffe erfolgen kann, indem das Lösungsmittel und/oder gelösten Kunststoff enthaltendes Lösungsmittel (Polymerlösung) verdampft wird.

Nach einer weiteren Maßnahme für das erfindungsgemäße Verfahren kann der im Lösungsmittel gelöste Kunststoff herausgelöst werden, indem das am Ende des Prozesses stehende Ablösen des Kunststoffs durch das Flashen (Entspannen des Systems nach Er- oder Überhitzen) der Suspension bzw. des Lösungsmittels erfolgt. Hierbei macht sich insbesondere der erfindungsgemäß hohe Temperaturbereich der Löse-Temperatur des Lösungsmittels in vorteilhafter Weise bemerkbar. Aufgrund der nahe der Siede-Temperatur liegenden Löse-Temperatur bewirkt ein Entspannen des Systems ein überaus schnelles bis schlagartiges Verdampfen des Lösungsmittels, wobei der zuvor noch darin gelöste Kunststoff abgelöst wird und insofern zurückbleibt. Auf diese Weise ergibt sich ein überaus wirtschaftlicher da schneller Betrieb. Es versteht sich von selbst, dass das sich dann im gasförmigen Zustand befindliche Lösungsmittel auf geeignete Weise wieder kondensiert wird, um dessen Rückgewinnung und bevorzugte erneute Verwendung im Sinne eines kontinuierlichen Kreislaufs zu erreichen.

Eine Weiterentwicklung sieht den Einsatz einer Zentrifuge als Bestandteil des gasdichten Systems vor. Dabei kann die Zentrifuge dem verbesserten Lösen wenigstens eines in und/oder an einem Feststoff befindlichen Kunststoffs innerhalb einer Suspension mit einem Lösungsmittel dienen, insbesondere wenn das System aufgrund der nahe, insbesondere über, der Siede-Temperatur des Lösungsmittels liegenden Löse-Temperatur unter Druck steht. Hierzu wird vorgeschlagen, dass die den Feststoff mit dem zumindest teilweise innerhalb des Lösungsmittels gelösten Kunststoff (Polymerlösung) enthaltende Suspension innerhalb der Zentrifuge zentrifugiert wird, so dass eine gleichmäßige und innerhalb kurzer Zeit erfolgende Abtrennung des Feststoffs von dem Lösungsmittel bzw. der Polymerlösung ermöglicht wird. Der hierfür notwendige Aufbau sieht vor, dass die Zentrifuge ein entsprechend gasdicht ausgestaltetes Gehäuse umfasst, innerhalb dem ein die Suspension aufnehmender, bevorzugt hohlzylindrischer, Dreheinsatz rotierbar angeordnet ist. Auf diese Weise wird die Suspension, ggf. unter Druck, durch den rotierenden Dreheinsatz zentrifugiert, während dieser von dem Gehäuse gasdicht umschlossen ist.

Der Erfindung liegt dabei die Erkenntnis zugrunde, dass der gasdichte Aufbau der Zentrifuge einen sicheren Umgang auch mit wenigstens einem leicht- oder gar hochentzündlichen Lösungsmittel ermöglicht, da durch das quasi verkapselte Zentrifugieren des Zentrifugierguts eine Entzündung etwaiger Lösungsmitteldämpfe ausgeschlossen ist. Hierdurch ist nunmehr der vorteilhafte Einsatz von Lösungsmitteln zum Lösen von Kunststoff mit dem vorteilhaften Auszentrifugieren des oder der übrigen Feststoffe prozesssicher kombinierbar. So kann der abzutrennende Kunststoff innerhalb kürzester Zeit in Lösung gehen, während der oder die übrigen Feststoffe aufgrund ihrer Massenträgheit mittels Zentrifugieren von dem den gelösten Kunststoff enthaltenden Lösungsmittel (Polymerlösung) kontrolliert entfernbar sind. Die Konsistenz der Lösungsmittel bzw. der gelösten Kunststoff enthaltenden Polymerlösung kann dabei beispielsweise so eingestellt sein, dass diese eine möglichst geringe Viskosität besitzt. Auf diese Weise kann der gelöste Kunststoff - anders als bei seiner Abtrennung durch reines Erhitzen - auch ohne nennenswerten Widerstand durch das restliche Zentrifugiergut hindurch von diesem abgetrennt werden.

Die gasdichte Ausgestaltung der Zentrifuge und/oder des gesamtem Systems ermöglicht zudem die besonders vorteilhafte Erhitzung der Polymerlösung und insbesondere des Lösungsmittels bis nahe, auf oder gar über seine Siede-Temperatur hinaus, was - neben einer mitunter so möglichen Erhöhung seiner Reaktionsfreudigkeit - besonders das anschließende Ablösen des gelösten Kunststoffs aus dem Polymerlösung in vorteilhafter Weise erleichtert.

Aufgrund der aus dem System und insbesondere dem geschlossenen Gehäuse der Zentrifuge resultierenden erfindungsgemäßen Gasdichtheit kann nunmehr auch trotz hoher Sicherheitsanforderungen ein großtechnischer Einsatz mit Lösungsmittel durchgeführt werden, welcher einen hohen Durchsatz an Zentrifugiergut ermöglicht. Gegenüber mit zum Teil hohen Temperaturen betriebenen Zentrifugen ergibt sich ferner der Vorteil eines überaus wirtschaftlichen und wartungsarmen Betriebs.

Dabei könnte das Gehäuse einen Einlauf sowie einen Auslauf besitzen. Diese können dazu vorgesehen sein, das Lösungsmittel und/oder die Lösungsmittel und darin gelösten Kunststoff enthaltene Polymerlösung in das gasdichte Gehäuse einzuleiten und aus diesem heraus auszuleiten. Hiernach könnte in Bezug auf das Gehäuse der Zentrifuge das Lösungsmittel und/oder die Polymerlösung über den Einlauf eingeleitet und über den Auslauf ausgeleitet werden.

Die Erfindung sieht ferner vor, dass der innerhalb des gasdichten Gehäuses angeordnete Dreheinsatz zumindest zeitweise mit Lösungsmittel und/oder Polymerlösung durchströmt werden kann.

So kann die Zentrifuge für eine kontinuierliche Durchströmung ausgelegt sein, um bereits gelösten Kunststoff in Form der Polymerlösung beispielsweise direkt aus dieser heraus auszuleiten. Auch kann die Lösung im Sinne eines Kreislaufes permanent durch die Zentrifuge hindurch strömen, bis ein erwünschtes Maß an darin gelöstem Kunststoff erreicht wird. Alternativ oder in Ergänzung hierzu können/kann das Lösungsmittel und/oder die Lösung eine Zeit lang innerhalb der Zentrifuge verbleiben, wobei dessen insbesondere kreisende Bewegung allein aus der Rotation des Dreheinsatzes her resultiert.

Aus der Strömung ergibt sich der Vorteil eines kontinuierlichen Ausgleichs und/oder einer gleichmäßigen Verteilung des im Lösungsmittel gelösten Kunststoffs. Dies erhöht den Anteil an in Lösung gehendem Kunststoff, da eine lokale Sättigung der Lösung vermieden wird. Die Strömung ermöglicht zudem einen kontinuierlichen Prozess, so dass gelösten Kunststoff enthaltenes Lösungsmittel quasi im Kreislauf geführt und kontinuierlich aus und/oder in das Gehäuse geleitet werden kann, um beispielsweise direkt im Anschluss ein Ablösen des gelösten Kunststoffs aus der Polymerlösung heraus vornehmen zu können.

Im Rahmen des erfindungsgemäßen Verfahrens wird es als vorteilhaft angesehen, wenn Lösungsmittel und/oder gelösten Kunststoff enthaltende Polymerlösung den Dreheinsatz nicht oder nicht nur in dessen Längsrichtung durchläuft, sondern dessen den Zentrifugiergutraum begrenzende Mantelfläche durchströmt. Hierzu kann die Mantelfläche wenigstens bereichsweise mit Durchgangsöffnungen ausgestattet sein, welche dann vom Zentrifugiergutraum aus mit Lösungsmittel und/oder Polymerlösung durchströmt werden. Hierdurch wird der Kontakt mit den sich aufgrund der Zentrifugalkräfte im Bereich der Mantelfläche ansammelnden Feststoffen deutlich erhöht. Da die Feststoffe mit der Zeit einen Feststoffkuchen mit zunehmender Dicke bilden können, wird so dessen weitere Durchdringung mit Lösungsmittel und/oder Polymerlösung sichergestellt. Auf diese Weise kann ein Maximum an Kunststoff aus dem Zentrifugiergut abgetrennt werden.

Nach einer besonders bevorzugten weitergehenden Maßnahme kann der Anteil an Sauerstoff innerhalb des Gehäuses zumindest teilweise herabgesetzt werden. Dies kann in vorteilhafter Weise durch das Einleiten von Inertgas erfolgen, in dessen Folge der innerhalb des Gehäuses enthaltene Sauerstoff in einem entsprechenden Maße verdrängt wird. Dies ermöglicht ein hohes Maß an Sicherheit für den Betrieb der Zentrifuge, da die sich innerhalb des Gehäuses ausbreitenden Lösungsmitteldämpfe mangels eines ausreichend vorliegenden Sauerstoffanteils keinen entzündlichen Zustand erreichen können. Zudem lässt sich durch das Einleiten von Inertgas in das gasdichte System hinein dessen Innendruck auf oder über den Dampfdruck des Lösungsmittels erhöhen, so dass auch bei Überschreiten der Siede-Temperatur des Lösungsmittels dessen Verdampfen prozesssicher unterbunden wird.

Gemäß einer Weiterentwicklung des Verfahrens können aus dem Zentrifugiergut abgetrennte Feststoffe in einen mit dem Gehäuse verbundenen gasdichten Behälter überführt werden. Besagte Überführung der Feststoffe kann dabei kontinuierlich oder zeitweise erfolgen. Dank des gasdichten Austausches der auszentrifugierten Feststoffe aus der Zentrifuge heraus in besagten Behälter wird die Sicherheit nochmals erhöht, da so ein etwaiger Kontakt mit Luftsauerstoff vollständig vermieden wird.

Um eine erleichterte Weiterbehandlung der auszentrifugierten Feststoffe zu erreichen, sieht eine vorteilhafte Maßnahme die Zugabe eines geeigneten Mittels vor, um die in den gasdichten Behälter überführten Feststoffe innerhalb diesem zu resuspendieren. Bei dem dabei verwendeten Mittel kann es sich in besonders bevorzugter Weise um Wasser (H₂O) handeln. Etwaiges noch enthaltenes Lösungsmittel und/oder gelösten Kunststoff enthaltendes Lösungsmittel wird hierdurch auf ein unkritisches Maß verdünnt, so dass eine sichere Weiterbehandlung auch in sich anschließenden offenen und insofern nicht-gasdicht ausführbaren Prozessen gewährleistet ist. Alternativ oder in Ergänzung zu Wasser kann auch wenigstens ein weiteres Lösungsmittel hierbei Verwendung finden.

Im Rahmen der vorgestellten Erfindung wird es als überaus vorteilhaft angesehen, wenn das erfindungsgemäße Lösungsmittel in einer gasdichten Zentrifuge, insbesondere innerhalb eines gasdichten Systems einer Abfall-Trennanlage, Verwendung findet. Hierin kann sie in besonders bevorzugter Weise nach den Maßnahmen des erfindungsgemäßen Verfahrens betrieben werden, um wenigstens einen in oder an einem Feststoff befindlichen Kunststoff mit Hilfe des wenigstens einen Lösungsmittels innerhalb einer Suspension von diesem ab- und/oder aus diesem herauszulösen.

Besonders bevorzugt kann das Lösungsmittel dabei beispielsweise eine Löse-Temperatur von 140° C (+/-5° K oder +/-10° K) und eine Siede-Temperatur von 100° C (+/-5° K oder +/-10° K) besitzen, wobei dessen Verwendung bei einem Innendruck des gasdichten Systems von 2,0 bis 5,0 bar, insbesondere von 3,0 bis 4,0 bar, durchführbar ist.

Weiterhin ist offenbart ein Verfahren zur Zusammenstellung eines als Verschnitt aus zwei oder mehr Lösungsmitteln zusammengesetzten Lösungsmittels gerichtet, welches zum Lösen wenigstens zweier in und/oder an einem Feststoff befindlicher Kunststoffe vorgesehen ist. Bei dem so zusammenzustellenden Lösungsmittel kann es sich in bevorzugter Weise um das zuvor näher erläuterte erfindungsgemäße Lösungsmittel handeln. Hierzu wird vorgeschlagen, dass aus den Gruppen der miteinander zusammenzusetzenden Lösungsmitteln das die jeweils niedrigsten Siede-Temperatur aufweisende Lösungsmittel zugesetzt wird. Hieraus ergibt sich der Vorteil einer möglichst geringen und insofern wirtschaftlichen Erhitzung des Lösungsmittels, um dieses innerhalb eines gasdichten System auf über seine Siedetemperatur zu erhitzen. Dies ist insofern günstig, als dass der gelöste Kunststoff durch das anschließende Flashen der Polymerlösung von dem Lösungsmittel in einfacher Weise und innerhalb kürzester Zeit mit nur geringem Aufwand ablösbar ist.

### Figuren Kurzbeschreibung

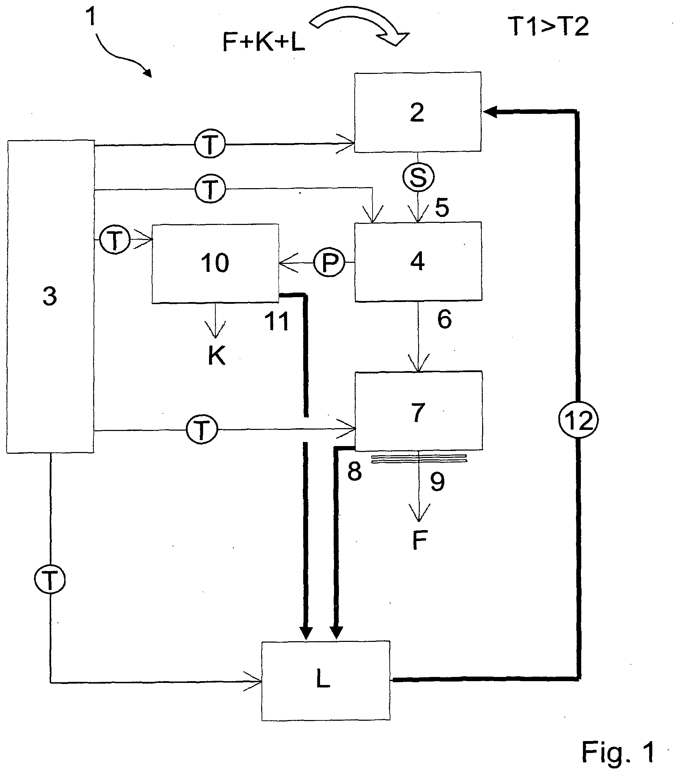

**Fig. 1** zeigt schematisch ein Ausführungsbeispiel für das erfindungsgemäße Verfahren mit dem erfindungsgemäßen Lösungsmittel.

### Detaillierte Beschreibung von Ausführungsbeispielen

**Fig. 1** zeigt einen schematischen Aufbau einer Abfall-Trennanlage 1 zur Durchführung des erfindungsgemäßen Verfahrens. Die zumindest in relevanten Bereichen als gasdichtes System ausgebildete Abfall-Trennanlage 1 umfasst eine eingangs angeordnete Lösestation 2, welche der Vorbereitung von Abfall zur anschließenden Trennung darin befindlicher Stoffe dient. Hierzu wird vorliegend Feststoff F mit wenigstens einem daran oder darin befindlichen Kunststoff K aufweisender Abfall in die Lösungsmittel L enthaltende Lösestation 2 überführt. Die Lösestation 2 kann beispielsweise einen oder mehrere hier nicht näher gezeigte Behälter und/oder Becken beinhalten, welche zumindest teilweise mit Lösungsmittel L gefüllt sind.

Beispielhaft wird vorliegend von einer Zusammensetzung des Abfalls aus einem reinen Kunststoffgemisch ausgegangen, welches 50 M-% an Polyethylen (PE) und weitere 50 M-% an Polypropylen (PP) beinhaltet. Das Kunststoffgemisch wird innerhalb der Lösestation 2 zu zwei Teilen mit neun Teilen Lösungsmittel L in Form von Methylcyclohexan (MCH) zu einer Suspension S (Abfallsuspension) vermischt.

Vorliegend bildet lediglich das Polyethylen (PE) den zu lösenden Kunststoff K, da das Polypropylen (PP) nicht innerhalb des verwendeten Lösungsmittels L in Lösung geht und insofern den verbleibenden Feststoff F bildet.

Die so angelegte Suspension S verbleibt für einen ausreichenden Zeitraum innerhalb der Lösestation 2, wobei dessen Temperatur auf eine Löse-Temperatur T1 des Lösungsmittels K (MCH) von 100° C erhöht und/oder wenigstens die Lösestation 2 bei einer Löse-Temperatur T1 betrieben wird. Da die Löse-Temperatur T1 des Lösungsmittels L oberhalb seiner Siede-Temperatur T2 von 99° C (T1 > T2) liegt, würde es zu einem unerwünschten Verdampfen des Lösungsmittels L kommen. Um dies zu verhindern, wird das System der Abfall-Trennanlage 1 mit einem oberhalb des atmosphärischen Drucks bzw. des Dampfdrucks des Lösungsmittels L liegenden Innendruck betrieben. Hierzu ist eine Inertisierungs-Einrichtung 3 vorgesehen, über welche - zur Erhöhung des Innendrucks und zur zumindest teilweisen Verdrängung von Sauerstoff aus dem System - ein Inertgas T in das gesamte gasdichte System geleitet wird.

Während dieses Zeitraums geht der zu lösende Kunststoff K (PE) zumindest teilweise, bevorzugt vollständig, innerhalb des seine Löse-Temperatur T1 aufweisenden Lösungsmittels L in Lösung, während der nicht in Lösung gehende Feststoff F (PP) innerhalb einer sich aus dem Lösungsmittel L und dem gelösten Kunststoff K bildenden Polymerlösung P verbleibt.

Anschließend wir die zuvor angelegte Suspension S in eine Trennstation 4 überführt, welche eine nicht näher gezeigte gasdichte Zentrifuge beinhaltet. Dabei gelangt die Suspension S über einen Einlauf 5 in besagte Zentrifuge der Trennstation 4, innerhalb welcher der Feststoff F aus der Suspension S herauszentrifugiert wird. Der dabei anfallende Feststoff F wird über einen geeigneten Auslauf 6 der Zentrifuge aus diesem heraus an eine Feststoffbehandlung 7 weitergeleitet. Hierin wir das Lösungsmittel L auf geeignete Weise von dem Feststoff F getrennt und über einen Abfluss 8 aus der Feststoffbehandlung 7 heraus abgeführt. Die Feststoffbehandlung 7 weist zudem eine eingebaute oder nachgeschaltete Schleuse 9 auf, über welche letztlich der Feststoff F (PE) frei von etwaigen Rückständen an Lösungsmittel L entnommen werden kann.

Die aus der Trennstation 4 verbleibende Polymerlösung P wird parallel hierzu an eine Lösemittelabtrennung 10 weitergeleitet, welche dem Ablösen des Kunststoffs K (PP) aus dem Lösungsmittel L heraus dient. Dies kann in besonders bevorzugter Weise durch das "Flashen" der Polymerlösung P erfolgen. Hierbei wird das System lokal innerhalb der Lösemittelabtrennung 10 entspannt, indem der erhöhte Innendruck abrupt gesenkt wird. Da das auf seine über der Siede-Temperatur T2 liegende Löse-Temperatur T1 erhitzte Lösungsmittel L in der Polymerlösung P dabei schlagartig auf seine Siede-Temperatur T2 abkühlt, geht dieses rasch in den dampfförmigen Zustand über, so dass eine überaus schnelle Ablösung des Kunststoffs K aus der Polymerlösung P heraus möglich ist. Im Ergebnis verlässt der so rückgewonnene Kunststoff K (PE) die Lösemittelabtrennung 10 frei von Lösungsmittel L. Das verdampfte Lösungsmittel L wird in nicht näher gezeigter Weise innerhalb des Systems kondensiert und über einen Abfluss 11 aus der Lösemittelabtrennung 10 heraus abgeführt.

Erkennbar wird das auf diese Weise aus der Trennstation 4 und der Lösemittelabtrennung 10 rückgewonnene Lösungsmittel L im Kreislauf geführt und über eine Rückleitung 12 wieder der Lösestation 2 zugeführt.

### Bezugszeichenliste

- 1: Abfall-Trennanlage
- 2: Lösestation
- 3: Inertisierungs-Einrichtung
- 4: Trennstation
- 5: Einlauf
- 6: Auslauf
- 7: Feststoffbehandlung
- 8: Abfluss
- 9: Schleuse
- 10: Lösemittelabtrennung
- 11: Abfluss
- 12: Rückleitung

- F: Feststoff
- K: Kunststoff
- L: Lösungsmittel
- P: Polymerlösung (=K+L)
- S: Suspension (=F+K+L)
- T: Inertgas
- T1: Löse-Temperatur
- T2: Siede-Temperatur

## Patentansprüche

1. Verfahren zum Lösen eines in und/oder an einem Feststoff (F) befindlichen Kunststoffs (K), innerhalb einer Suspension (S), wie etwa Abfallsuspension, mit einem Lösungsmittel (L), wobei der Kunststoff (K) unter Ausbildung einer Polymerlösung (P) in dem Lösungsmittel (L) der Suspension (S) gelöst wird, **dadurch gekennzeichnet, dass** die Suspension (S) innerhalb eines gasdichten Systems auf eine in einem Temperaturbereich +/- 5° K um die Siede-Temperatur (T2) des Lösungsmittels (L) liegende Löse-Temperatur (T1) erhitzt wird, wobei die Siede-Temperatur (T2) in einem Bereich von 100 °C bis 140 °C liegt, und wobei der zu lösende Kunststoff Polyethylen (PE) ist und das Lösungsmittel (L) Cycloalkane aufweist.

2. Verfahren nach Anspruch 1, **dadurch gekennzeichnet, dass** ein Innendruck des gasdichten Systems durch einen Verdichter und/oder eine Temperaturveränderung manipuliert, insbesondere erhöht, wird.

3. Verfahren nach Anspruch 1 oder 2, **dadurch gekennzeichnet, dass** das der im Lösungsmittel (L) der Polymerlösung (P) gelöste Kunststoff (K) nach dem Erhitzen durch zumindest bereichsweises Entspannen des gasdichten Systems von dem Lösungsmittel (L) abgelöst wird.

4. Verfahren nach einem der Ansprüche 1 bis 3, **dadurch gekennzeichnet, dass** das gasdichte System eine Zentrifuge aufweist, welche ein gasdichtes Gehäuse besitzt, wobei die Suspension (S) innerhalb des gasdichten Gehäuses der Zentrifuge zentrifugiert wird.

5. Verfahren nach Anspruch 4, **dadurch gekennzeichnet, dass** ein innerhalb des gasdichten Gehäuses drehbar angeordneter Dreheinsatz zumindest zeitweise mit dem Lösungsmittel (L) und/oder der Polymerlösung (P) durchströmt wird.

6. Verfahren nach Anspruch 4 oder 5, **dadurch gekennzeichnet, dass** ein Anteil an Sauerstoff innerhalb des gasdichten Gehäuses zumindest teilweise durch Einleiten von Inertgases (T) verdrängt wird.

## Claims

1. Method for dissolving a plastic (K) contained in and/or on a solid (F) within a suspension (S), such as a waste suspension, with a solvent (L), wherein the plastic (K) is dissolved in the solvent (L) of the suspension (S) with the formation of a polymer solution (P), **characterized in that** the suspension (S) is heated within a gas-tight system to a dissolution temperature (T1) in a temperature range of +/- 5° K around the boiling temperature (T2) of the solvent (L), wherein the boiling temperature (T2) is in the range of 100 °C to 140 °C, and the plastic to be dissolved is polyethylene (PE) and the solvent (L) comprises cycloalkanes.

2. Method of claim 1, **characterized in that** an internal pressure of the gas-tight system is manipulated, in particular increased, by a compressor and/or a change in temperature.

3. Method of claim 1 or 2, **characterized in that** that the plastic (K) dissolved in the solvent (L) of the polymer solution (P) is separated from the solvent (L) after heating by at least partial depressurization of the gas-tight system.

4. Method according to any one of claims 1 to 3, **characterized in that** the gas-tight system comprises a centrifuge which has a gas-tight housing, whereby the suspension (S) is centrifuged within the gas-tight housing of the centrifuge.

5. Method of claim 4, **characterized in that** a rotating insert arranged within the gas-tight housing is at least temporarily flowed through with the solvent (L) and/or the polymer solution (P).

6. The method of claim 4 or 5, **characterized in that** a proportion of oxygen within the gas-tight housing is at least partially displaced by the introduction of inert gas (T).

## Revendications

1. Procédé de dissolution d'un matériau synthétique (K), se trouvant dans et/ou sur un solide (F), dans une suspension (S), telle que par exemple une suspension de déchets, à l'aide d'un solvant (L), le matériau synthétique (K) étant dissous dans le solvant (L) de la suspension (S) avec formation d'une solution de polymère (P), **caractérisé en ce que** la suspension (S) est chauffée, dans un système étanche aux gaz, à une température de dissolution (T1) se situant dans une plage de température de +/- 5° K autour de la température d'ébullition (T2) du solvant (L), la température d'ébullition (T2) se situant dans une plage de 100 °C à 140 °C et le matériau synthétique à dissoudre étant du polyéthylène (PE) et le solvant (L) présentant des cycloalcanes.

2. Procédé selon la revendication 1, **caractérisé en ce qu'**une pression interne du système étanche aux gaz est manipulée, en particulier augmentée, par un compresseur et/ou une modification de température.

3. Procédé selon la revendication 1 ou 2, **caractérisé en ce que** le matériau synthétique (K) dissous dans le solvant (L) de la solution de polymère (P) est séparé du solvant (L) après le chauffage par une détente au moins partielle du système étanche aux gaz.

4. Procédé selon l'une des revendications 1 à 3, **caractérisé en ce que** le système étanche aux gaz présente une centrifugeuse, qui possède une enceinte étanche aux gaz, la suspension (S) étant centrifugée dans l'enceinte étanche aux gaz de la centrifugeuse.

5. Procédé selon la revendication 4, **caractérisé en ce qu'**un insert rotatif agencé rotatif dans l'enceinte étanche aux gaz est traversé au moins temporairement par le solvant (L) et/ou la solution de polymère (P).

6. Procédé selon la revendication 4 ou 5, **caractérisé en ce qu'**une proportion d'oxygène dans l'enceinte étanche aux gaz est au moins partiellement chassée par introduction de gaz inerte (T).
